# EUROPÄISCHE PATENTANMELDUNG

(11) **EP 3 239 400 A1**
(43) Veröffentlichungstag der Anmeldung: **01.11.2017**
(21) Anmeldenummer: 17000535.9
(22) Anmeldetag: 31.03.2017
(51) Int. Cl.: E01C 19/48

(54) **STRASSENBAUMASCHINE, INSBESONDERE STRASSENFERTIGER ODER BESCHICKER**

(30) Priorität: 08.04.2016 DE 102016004075
(71) Anmelder: Dynapac GmbH, 26203 Wardenburg (DE)
(72) Erfinder: Anup, Jacob, 20097 Hamburg (DE); Lübben, Jens, 26316 Varel (DE); Dallmann, Simon, 26209 Sandkrug (DE); Palanikumar, Visakan, 560036 Karnataka (IN)
(74) Vertreter: Möller, Friedrich

(57) **Zusammenfassung**

Das für die Herstellung eines Straßenbelags mittels einer Straßenbaumaschine verwendete Straßenbaumaterial wird heiß verarbeitet. Das erhitzte Straßenbaumaterial sondert Dämpfe ab, die unangenehm riechen und gesundheitsgefährdend für die Bedienpersonen der Straßenbaumaschine sind. Bekannte Abgasleitungen nehmen viel Platz im Bereich des Bedienstandes (18) ein und behindern die Sicht der Bedienperson auf den zu kontrollierenden Bereich. Die Anmeldung schafft eine Straßenbaumaschine bei der die Dämpfe des Straßenbaumaterials abführbar sind, ohne dass der Betrieb der Straßenbaumaschine nachteilig beeinflusst wird. Dazu ist es vorgesehen, dass ein Fahrwerksrahmen (14) der Straßenbaumaschine Kanäle aufweist, die zum Abführen von Abgasen oder Dämpfen des Straßenbaumaterials aus dem Bereich des Förderers und/oder einer in Fertigungsrichtung (13) gesehen vor der Einbaubohle (17) angeordneten Verteilerschnecke (16) zu einem Auslass (29) ausgebildet sind.

## Beschreibung

Die Erfindung betrifft eine Straßenbaumaschine, insbesondere einen Straßenfertiger oder einen Beschicker, gemäß dem Oberbegriff des Anspruchs 1.

Straßenfertiger und Beschicker verfügen über einen meist mittigen Bedienstand für einen Fahrer bzw. eine Bedienperson der Straßenbaumaschine. Um die Sicht des Fahrers zu verbessern, ist es bekannt, den Bedienstand möglichst zentral und erhöht auf dem Straßenfertiger bzw. Beschicker zu positionieren. Durch diese erhöhte Position erhält die Bedienperson in dem Bedienstand Sicht auf einen Vorratsbehälter zur Aufnahme des einzubauenden Straßenmaterials, welcher in Einbaurichtung gesehen an einem vorderen Ende des Straßenfertigers bzw. des Beschickers angeordnet ist. Von diesem Vorratsbehälter wird das Straßenbaumaterial durch einen Förderer, insbesondere durch einen Kratzerförderer, unter dem Bedienstand hindurch zu einem in Einbaurichtung gesehen hinteren Ende des Straßenfertigers bzw. des Beschickers transportiert. Bei einem Straßenfertiger wird das Straßenbaumaterial sodann durch eine Verteilerschnecke quer zur Einbaurichtung über die gesamte Breite des herzustellenden Straßenbelags verteilt, damit es von einer Einbaubohle des Straßenfertigers verfestigt werden kann. Bei einem Beschicker wird das Straßenbaumaterial über ggf. einen weiteren Förderer einer den Beschicker folgenden Straßenbaumaschine zugeführt.

Das für die Herstellung des Straßenbelags verwendete Straßenbaumaterial wird in einem heißen Zustand verarbeitet, sodass dieses eine ausreichende Viskosität aufweist. Dieses erhitzte Straßenbaumaterial sondert jedoch Dämpfe ab, die nicht nur unangenehm riechen, sondern auch gesundheitsgefährdend für die Bedienpersonen der Straßenbaumaschine sind. Besonders Personen, die sich während des Betriebes der Straßenbaumaschine zur Steuerung des Herstellungsprozesses auf dem Bedienstand befinden sind aufgrund der Anordnung des Bedienstandes über dem Förderer den giftigen Dämpfen des heißen Straßenbaumaterials direkt ausgesetzt.

Es ist bekannt, die Dämpfe direkt aus dem Fahrwerksrahmen der Straßenbaumaschine, in dem der Förderer angeordnet ist, abzusaugen und die Dämpfe über Rohre und Schläuche aus dem Umfeld des Bedienstandes bzw. der Bedienperson abzuführen. Bekanntermaßen werden dafür Schläuche mit einem großen Querschnitt eingesetzt, die außen an Säulen des Bedienstandes entlanggeführt werden und ihren Auslass oberhalb eines Daches des Bedienstandes haben, sodass die Dämpfe über der Bedienperson der Atmosphäre zugeführt werden. Diese Schläuche nehmen allerdings nicht nur viel Platz im Bereich des Bedienstandes ein, sie behindern auch erheblich die Sicht der Bedienperson auf den zu kontrollierenden Bereich.

Da der Bedienstand der Straßenbaumaschine bzw. deren Dach für Transportzwecke oder für den Zugang niedriger Einbauorte herunterschwenkbar sein kann, erweisen sich voluminöse Schläuche oder gar Rohre, die zu dem Dach geführt werden, als äußerst störend, da diese das Herabschwenken des Daches behindern.

Darüber hinaus ist es bekannt, dass die giftigen Dämpfe des Straßenbaumaterials abgesaugt werden und über einen komplexen Schlauch- bzw. Rohrverlauf dem Abgassystem des Primärantriebes zugeführt werden.

Der Erfindung liegt die Aufgabe zugrunde, eine Straßenbaumaschine, insbesondere einen Straßenfertiger oder einen Beschicker, zu schaffen, bei dem die Dämpfe des Straßenbaumaterials abführbar sind, ohne dass der Betrieb der Straßenbaumaschine nachteilig beeinflusst wird.

Eine Straßenbaumaschine, insbesondere ein Straßenfertiger oder ein Beschicker, zur Lösung dieser Aufgabe weist die Merkmale des Anspruchs 1 auf. Demnach ist es vorgesehen, dass ein Fahrwerksrahmen Kanäle aufweist, die zum Abführen von Abgasen oder Dämpfen des Straßenbaumaterials aus dem Bereich des Förderers und/oder einer in Fertigungsrichtung gesehen vor der Einbaubohle angeordneten Verteilerschnecke (16) zu einem Auslass (29) ausgebildet sind. Bei diesen Abgasen bzw. Dämpfen kann es sich um die giftigen Ausgasungen handeln, welche von dem heißen Straßenbaumaterial abgesondert werden. Durch die Verwendung der Kanäle zum Abführen der Abgase erübrigt sich die Verwendung von voluminösen Schläuchen oder Rohren.

Ein besonders vorteilhaftes Ausführungsbeispiel kann es vorsehen, dass die Kanäle des Fahrwerksrahmens integrale Bestandteile desselben sind. Durch die Verwendung der den Fahrwerksrahmen eigenen Kanäle als Abgasabführmittel können Kosten gespart werden, da auf zusätzliche Schläuche oder dergleichen verzichtet werden kann.

Die Erfindung sieht es insbesondere vor, dass mindestens eine Säule des Bedienstandes wenigstens abschnittsweise als Kanal ausgebildet ist zum Abführen von Abgasen oder Dämpfen des Straßenbaumaterials aus dem Bereich des Förderers und/oder aus dem Bereich einer in Fertigungsrichtung gesehen vor der Einbaubohle angeordneten Verteilerschnecke zu einem Auslass, wobei der Auslass, vorzugsweise über dem Bedienstand, positioniert ist. Durch die Verwendung der Säulen des Bedienstandes als Kanäle zum Abführen der Abgase erübrigt sich die Verwendung von voluminösen Schläuchen oder Rohren, die am Bedienstand angebracht werden. Somit wird durch die Nutzung der Säulen des Bedienstandes als Kanäle nicht nur eine freie Sicht der Bedienperson auf das direkte Umfeld gewahrt, darüber hinaus lässt sich der Bedienstand bzw. das Dach auch ohne Einschränkung in der Bewegungsfreiheit absenken bzw. aufrichten. Durch die Verwendung der den Bedienstand eigenen Säulen als Abgasabführmittel können darüber hinaus Kosten gespart werden, da auf zusätzliche Schläuche oder dergleichen verzichtet werden kann.

Bevorzugt sieht es die vorliegende Erfindung weiter vor, dass mindestens in einem Kanal oder in einer Säule wenigstens bereichsweise ein, vorzugsweise flexibler, Schlauch angeordnet ist, um Dämpfe des Straßenbaumaterials oder Abgase aus dem Bereich des Förderers und/oder der Verteilerschnecke zu einem Auslass zu leiten. Ein in die Säule integrierter Schlauch gewährleistet, dass die Abgase in die mindestens eine Säule abgeführt werden, ohne dass die Gase mit der Säule in Verbindung treten. Insbesondere bei Säulen, die nicht vollständig geschlossen sind, ist die Verwendung von Schläuchen in den Säulen vorteilhaft. Darüber hinaus ist es jedoch auch denkbar, dass die Säulen, welche den Bedienstand bilden und das Dach tragen, derart ausgebildet sind bzw. geschweißt sind, dass sie keine Öffnungen aufweisen, durch welche die Abgase ungewollt entweichen könnten.

Insbesondere kann es die vorliegende Erfindung des Weiteren vorsehen, dass mindestens ein Kanal einer Säule zusammen mit mindestens einem innerhalb oder außerhalb der Säule angeordneten Schlauch eine Leitung für die Dämpfe, insbesondere eine Abgasleitung, bilden, die vom Förderer und/oder der Verteilerschnecke bis zum Auslass über den Bedienstand führt. Als besonders vorteilhaft erweist es sich, den Kanal in der Säule mit einem Schlauch zu kombinieren, der außerhalb der Säule angeordnet ist und zwar vorzugsweise an Gelenken oder Drehachsen, um die Säule bzw. der Bedienstand beim Verschwenken oder Aufrichten bewegt wird. Da diese Bereiche der Abgasleitung nur kurz sind, behindern diese zusätzlichen kurzen Schläuche weder das Sichtfeld der Bedienperson noch sind sie störend bei der Bedienung des Bedienstandes.

Ein weiteres vorteilhaftes Ausführungsbeispiel kann es vorsehen, dass der mindestens eine Kanal in einem ersten Säulenabschnitt einer Säule angeordnet ist und der mindestens eine, vorzugsweise flexible, Schlauch außen an einem zweiten Säulenabschnitt der Säule angeordnet ist. Insbesondere, wenn die Säule aus zwei gegeneinander verschwenkbaren Säulenabschnitten besteht, hat es sich als vorteilhaft erwiesen, einen Übergang zwischen den beiden Säulenabschnitten durch einen kurzen flexiblen Schlauch zu überbrücken. Gleichermaßen lassen sich weitere Übergänge wie beispielsweise von dem Fahrwerksrahmen zur Säule oder von der Säule zu einem auf dem Dach des Bedienstandes angeordneten Auspuffrohr herstellen.

Somit kann es weiter vorgesehen sein, dass ein Ende des in dem ersten Säulenabschnitt angeordneten Kanals durch ein Verbindungsmittel, das vorzugsweise außen an dem ersten Säulenabschnitt angeordnet ist, mit einem Ende des außen an dem zweiten Säulenabschnitt angeordneten Schlauchs verbunden ist. Bei diesem Verbindungsmittel kann es sich beispielsweise um einen trichterartigen Vorsprung handeln, der aus der Säule herausgeführt wird bzw. an einem weiteren Säulenabschnitt wieder hineinführt.

Vorzugsweise kann es die vorliegende Erfindung außerdem vorsehen, dass der Fahrwerksrahmen unterhalb des Bedienstandes eine Ansaugöffnung, die insbesondere durch ein Filterelement abgedeckt ist, aufweist, wobei durch die Absaugöffnung Dämpfe oder Abgase von dem Förderer, insbesondere von dem heißen Straßenbaumaterial, in das Innere des Fahrwerksrahmen ansaugbar ist. Das Filterelement ist derart ausgebildet, dass es lediglich die Abgase bzw. Dämpfe durchlässt und größere Partikel wie Steine oder Staub nicht. Dadurch kann verhindert werden, dass das Innere der Abgasleitung bzw. ein die Ansaugkraft generierendes Mittel beschädigt wird.

Gemäß einem weiteren Aspekt der Erfindung kann es vorgesehen sein, dass der Verteilerschnecke mindestens ein Absaugorgan, insbesondere zwei flexible Schläuche, zugeordnet sind, die vorzugsweise an gegenüberliegenden Enden der Verteilerschnecke angeordnet sind, zum Absaugen der Dämpfe des Straßenbaumaterials. Durch diese Schläuche, bei denen es sich beispielsweise um Spiralschläuche handeln kann, werden die Dämpfe des Straßenbaumaterials direkt aus dem Bereich der Verteilerschnecke abgesaugt und weggeführt. Da das erhitzte Material kontinuierlich dampft, ist es vorteilhaft die Dämpfe an möglichst vielen Orten entlang des Einbau- bzw. Transportprozesses abzusaugen. Es ist darüber hinaus denkbar, dass die Dämpfe an der Verteilerschnecke durch eine Vielzahl von Schläuchen, oder einem breiten Absaugorgan abgesaugt werden.

Weiter kann es erfindungsgemäß vorgesehen sein, dass das mindestens eine Absaugorgan mit einem die Verteilerschnecke haltenden Rahmen verbunden ist, wobei der Rahmen vorzugsweise integrale Kanäle aufweist, die mit dem mindestens einem Absaugorgan verbunden sind zum Absaugen der Dämpfe des Straßenbaumaterials. Durch die Verwendung der dem Rahmen eigenen Kanäle sind keine zusätzlichen Kanäle oder Leitungen an dem Rahmen zu installieren. So lässt sich das Absaugen der Dämpfe auf eine einfache Art realisieren; auch ein einfaches Nachrüsten mit einem Absaugorgan ist so möglich. Darüber hinaus nehmen die Kanäle zum Abführen der Dämpfe keinen zusätzlichen Platz in Anspruch und behindern somit auch nicht die Sicht der Bedienperson.

Bevorzugt ist es vorgesehen, dass über der Verteilerschnecke vor dem mindestens einem Absaugorgan ein Filterelement, insbesondere ein Sieb oder eine Perforation im die Verteilerschnecke haltenden Rahmen, angeordnet ist, welches Partikel aus den Dämpfen abscheidet. Das Filterelement kann dabei derart ausgebildet sein, dass lediglich die Dämpfe durchgelassen werden und größere Partikel wie Steine oder Staub nicht. Dadurch kann verhindert werden, dass das Innere der Abgasleitung bzw. ein die Ansaugkraft generierendes Mittel beschädigt wird.

Weiter kann es insbesondere vorgesehen sein, dass dem Fahrwerksrahmen ein Gebläse zugeordnet ist, das die Dämpfe oder Abgase vom Förderer und/oder der Verteilerschnecke durch die Ansaugöffnung und/oder das Filterelement ansaugt und durch den mindestens einen Kanal und/oder dem mindestens einen Schlauch dem Auslass zuführt. Dieses Gebläse kann integraler Bestandteil der Abgasleitung sein und ist im Inneren des Fahrwerksrahmens bzw. unter dem Bedienstand angeordnet. Dieses Gebläse kann entweder einen eigenen Antrieb aufweisen oder mit dem Hauptantriebsaggregat des Straßenfertigers in Verbindung stehen.

Bevorzugt sieht es die vorliegende Erfindung weiter vor, dass die Ansaugöffnung, das Gebläse und ein Kanal durch mindestens einen weiteren dem Fahrwerksrahmen integralen Kanal und/oder einen, insbesondere flexiblen, Schlauch miteinander verbunden sind. Der Fahrwerksrahmen kann mitunter kanalartige Profile aufweisen, die der Stabilisierung des Rahmens dienen. Derartige Kanäle können verwendet werden, um die Abgase bzw. die Dämpfe von der Ansaugöffnung zu einem weiteren Kanal oder Schlauch des Bedienstandes zu führen. Somit werden erfindungsgemäß der Straßenbaumaschine eigene, vorhandene Kanäle genutzt, um die Abgase oder Dämpfe effektiv einem Bereich zu zuführen, in dem die Abgase oder Dämpfe die Bedienperson nicht in einer gesundheitsgefährdenden Weise stören.

Durch ein weiteres Ausführungsbeispiel kann es vorgesehen sein, dass das Filterelement der Verteilerschnecke, das Gebläse und ein Kanal durch mindestens einen weiteren dem Fahrwerksrahmen integralen Kanal und/oder einen, insbesondere flexiblen, Schlauch miteinander verbunden sind. Die Kanäle können verwendet werden, um die Abgase bzw. die Dämpfe von dem Filterelement zu einem weiteren Kanal oder Schlauch des Bedienstandes zu führen. Die der Straßenbaumaschine eigenen Kanäle werden somit genutzt, um die Abgase oder Dämpfe effektiv einem Bereich zu zuführen, in dem die Abgase oder Dämpfe nicht stören.

Außerdem kann es des Weiteren vorgesehen sein, dass zwei Säulen des Bedienstandes als Kanäle zum Abführen von Abgasen ausgebildet sind, wobei insbesondere jeweils ein Ende der Kanäle mit jeweils einem Schlauch verbunden sind, die über weitere Kanäle und/oder Schläuche mit dem Gebläse verbunden sind. Durch die Verwendung von mehreren Säulen, nämlich zwei oder drei, zum Abführen der Abgase, kann der Querschnitt der verwendeten Kanäle und Schläuche reduziert werden, sodass ein störender Einfluss von Schläuchen, welche im Gesichtsfeld der Bedienperson angeordnet sind, noch weiter verringert wird.

Gemäß einem weiteren Ausführungsbeispiel kann es vorgesehen sein, dass von dem Gebläse mindestens ein Schlauch, vorzugsweise zwei Schläuche, zu einem Rohr führen, welches quer zur Fertigungsrichtung ausgerichtet ist, und dessen Enden jeweils mit einer Säule des Bedienstandes in Verbindung stehen. Durch das Rohr werden die Dämpfe auf die Säulen verteilt bzw. aufgeteilt, wodurch der Querschnitt der Kanäle in den Säulen reduziert werden kann. Was wiederum eine Platzersparnis mit sich bringt.

Ein weiteres Ausführungsbeispiel der vorliegenden Erfindung kann es vorsehen, dass jeweils ein flexibler Schlauch einen Kanal des Fahrwerksrahmens mit einem Kanal einer Säule und/oder einen ersten Säulenabschnitt mit einem zweiten Säulenabschnitt und/oder eine Säule bzw. einen zweiten Säulenabschnitt mit dem Auslass verbindet. Somit bietet es sich an, jeweils zwei aufeinanderfolgende Kanäle durch einen flexiblen Schlauch zu verbinden, um die notwendige Beweglichkeit des Bedienstandes zu wahren.

Außerdem kann es vorgesehen sein, dass die Abgase der Antriebseinheit von dem Gebläse durch mindestens einen Schlauch und durch mindestens einen Kanal dem Auslass zuführbar sind. Somit ist es denkbar, nicht nur die Dämpfe des Straßenbaumaterials abzuführen, sondern auch die Abgase des Antriebs, insbesondere des Verbrennungsmotors.

Ein bevorzugtes Ausführungsbeispiel der Erfindung wird nachfolgend anhand der Zeichnung näher erläutert. In dieser zeigen:
- Fig. 1: eine schematische Seitenansicht einer Baumaschine, nämlich eines Straßenfertigers,
- Fig. 2: eine perspektivische Ansicht eines Bedienstandes mit Abgasleitung,
- Fig. 3: eine perspektivische Ansicht des Fahrwerksrahmens,
- Fig. 4: eine perspektivische Ansicht des Fahrwerksrahmens, und
- Fig. 5: eine perspektivische Sicht in den Fahrwerksrahmen.

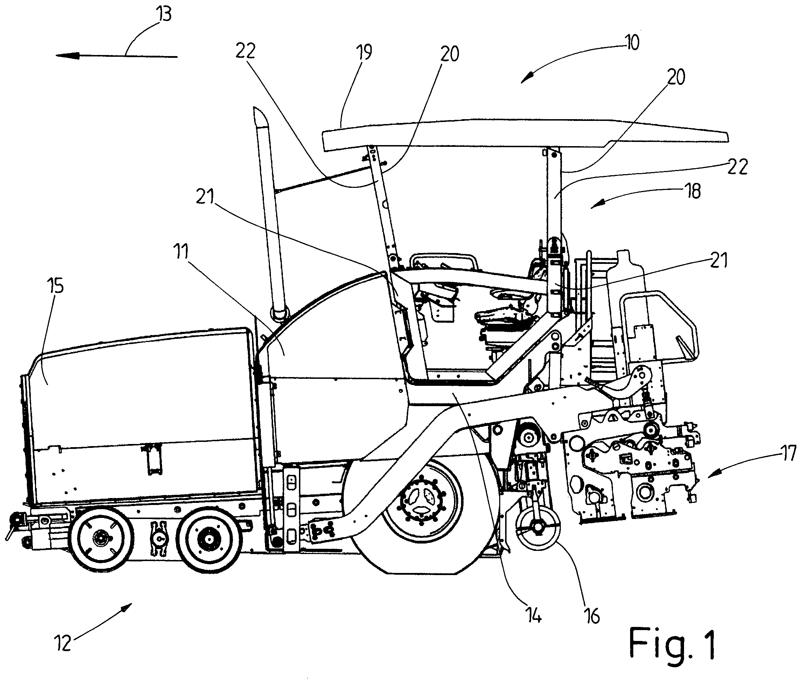

Die vorliegende Erfindung einer Straßenbaumaschine wird in den Fig. 1 bis 5 am Beispiel eines Straßenfertigers 10 beschrieben. Es sei jedoch darauf hingewiesen, dass die vorliegende Erfindung gleichermaßen auf einen Beschicker oder andere Straßenbaumaschinen anwendbar ist.

Der hier dargestellte Straßenfertiger 10 ist selbstfahrend ausgebildet. Dazu verfügt er über eine zentrale Antriebseinheit 11, die beispielsweise einen Verbrennungsmotor aufweist, der Hydraulikpumpen zur Versorgung von Hydraulikmotoren und ggf. einen Generator zur Erzeugung von Energie für weitere elektrische Antriebe aufweist.

Der Straßenfertiger 10 weist ein Fahrwerk 12 auf, das im gezeigten Ausführungsbeispiel als Radfahrwerk ausgebildet ist, aber auch als Raupenfahrwerk oder als ein anderes Fahr- bzw. Laufwerk ausgebildet sein kann. Das Fahrwerk 12 wird von einer Antriebseinheit derart angetrieben, dass der Straßenfertiger 10 in eine Fertigungsrichtung 13 vorwärts bewegbar ist.

Das Fahrwerk 12 ist einem Fahrwerksrahmen 14 oder Chassis zugeordnet, an welchem sämtliche Komponenten des Straßenfertigers 10 angelagert sind.

In Fertigungsrichtung 13 gesehen ist vor der Antriebseinheit 11 ein wannen- bzw. muldenartig ausgebildeter Vorratsbehälter 15 angeordnet. Der Vorratsbehälter 15 nimmt einen Vorrat des zur Herstellung des Straßenbelags dienenden Materials, beispielsweise Asphalt, auf. Gegebenenfalls können auch mehrere Vorratsbehälter vorgesehen sein.

Durch einen nicht gezeigten Förderer bzw. durch Förderorgane wird das Straßenbaumaterial vom Vorratsbehälter 15 unter der Antriebseinheit 11 hindurch zum in Fertigungsrichtung 13 hinteren Ende des Straßenfertigers 10 transportiert. Von einer hinter dem Fahrwerk 12 angeordneten Verteilerschnecke 16 wird das Straßenbaumaterial über die gesamte Arbeitsbreite des Straßenfertigers 10 verteilt. Dabei gelangt ein Vorrat des Straßenbaumaterials vor eine hinter der Verteilerschnecke 16 auf- und abbewegbare am Fahrwerksrahmen 14 angehängte Einbaubohle 17 (Fig. 1).

Der Straßenfertiger 10 weist einen Bedienstand 18 auf, der im gezeigten Ausführungsbeispiel als eine Kabine ausgebildet ist. Diese Kabine ist bevorzugt zur Aufnahme einer Bedienperson bzw. eines Fahrers ausgebildet. Im Inneren des Bedienstandes 18 befinden sich alle wesentlichen Bedienelemente, die die Bedienperson zum Betrieb des Straßenfertigers benötigt. Der Bedienstand 18 ist im hinteren Endbereich des Straßenfertigers 10 oberhalb des Fahrwerksrahmens 14 und hinter der Antriebseinheit 11 angeordnet. Die Antriebseinheit kann sich auch ganz oder teilweise unterhalb des Bedienstandes 18 befinden.

Der Bedienstand weist ein Dach 19 auf, welches die Bedienperson vor jeglichen Witterungsbedingungen schützt. Das Dach 19 wird durch vier Säulen 20 auf dem Fahrwerksrahmen 14 getragen (Fig. 1). Für Transportzwecke oder auch für das Herstellen eines Straßenbelags mit einem niedrigen Deckenbereich lässt sich das Dach 19 verschwenken. Dazu sind die hier dargestellten Säulen 20 zweiteilig ausgebildet, so dass sie einen ersten Säulenabschnitt 21 und einen zweiten Säulenabschnitt 22 aufweisen. Der zweite Säulenabschnitt 22 ist über Gelenke bzw. Drehachsen schwenkbar mit dem ersten Säulenabschnitt 21 bzw. mit dem Dach 19 verbunden, so dass dieses nach unten bzw. nach oben parallelogrammartig verschwenkbar ist.

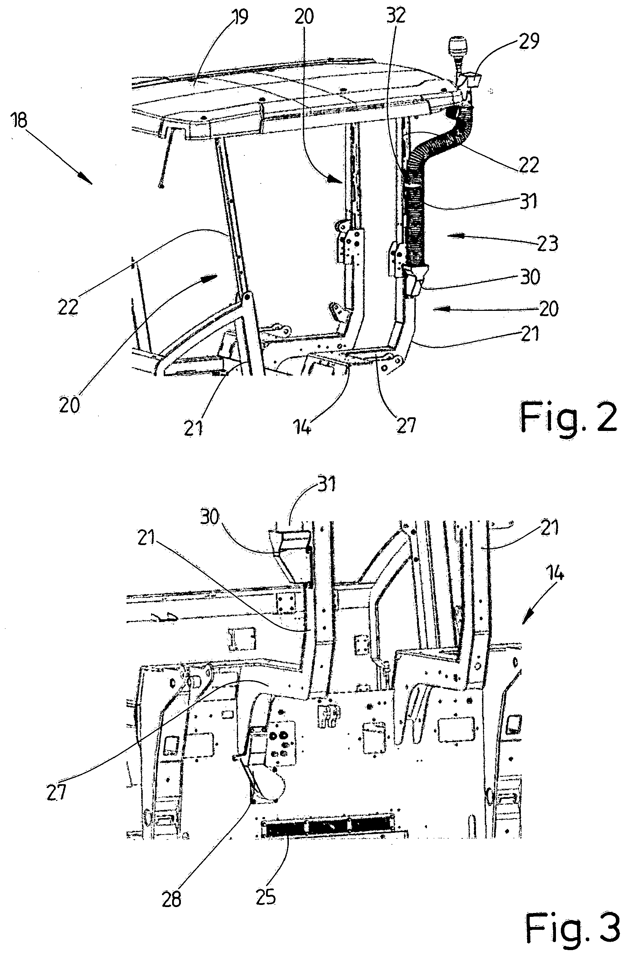

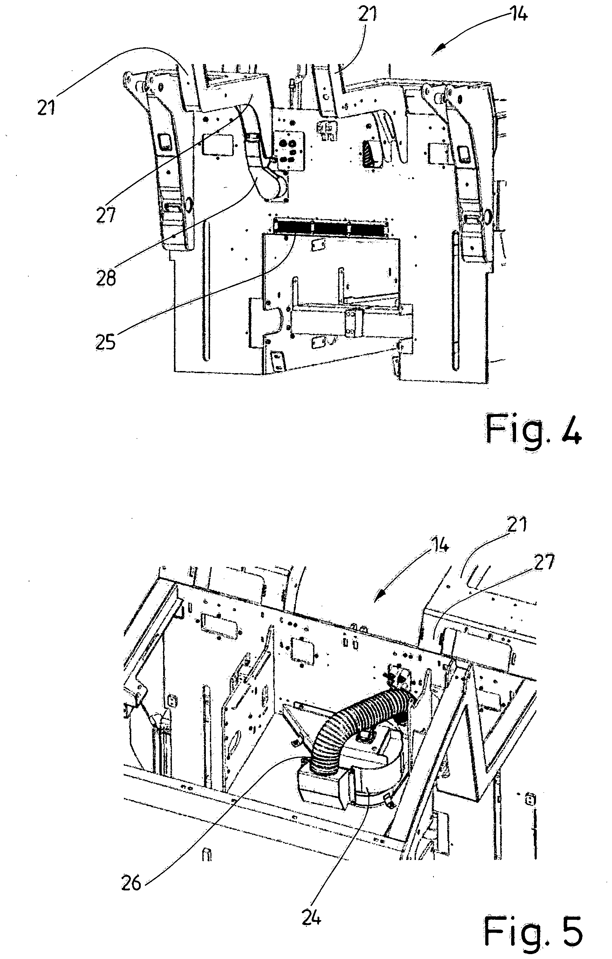

Dem Bedienstand 19 ist erfindungsgemäß eine in Fig. 1 nicht dargestellte Abgasleitung 23 zugeordnet (Fig. 2). Bei dem in Fig. 2 dargestellten Ausführungsbeispiel der vorliegenden Erfindung werden Abgase bzw. giftige Dämpfe von dem Straßenbaumaterial durch die Abgasleitung 23 in einen Bereich oberhalb des Daches 19 des Bedienstandes 18 transportiert. Das Straßenbaumaterial, das mittels des Förderers von den Vorratsbehältern 15 zu der Verteilerschnecke 16 transportiert wird, bewegt sich durch den Fahrwerksrahmen 14 unter den Bedienstand 18 hindurch. Das einzubauende Straßenbaumaterial wird im heißen Zustand der Verteilerschnecke 16 zugeführt. Die dabei frei gesetzten Abgase bzw. Dämpfe des Straßenbaumaterials sind giftig und müssen daher aus dem Arbeitsbereich der Bedienperson im Bedienstand 18 fortgeführt werden. Daher ist im Inneren des Fahrwerkrahmens 14 ein Gebläse 24 angeordnet, welches die Abgase durch eine Ansaugöffnung 25 absaugt (Fig. 4, Fig. 5). Die Ansaugöffnung 25 ist am Fahrwerksrahmen 14 an einer Stelle positioniert, wo der nicht dargestellte Förderer mit dem heißen Straßenbaumaterial aus dem Fahrwerksrahmen 14 austritt. Dadurch können die Abgase direkt und effektiv durch die Ansaugöffnung 25 abgesaugt werden.

Darüber hinaus sieht es die Erfindung vor, dass die Dämpfe mittels nichtdargestellter Schläuche und Kanäle aus dem Bereich der Verteilerschnecke 16 abgesaugt werden und dem Auslass 29 zuführbar sind.

Das Gebläse 24 im Inneren des Fahrwerkrahmens 14 leitet die Abgase bzw. die Dämpfe weiter durch einen Schlauch, vorzugsweise einen flexiblen Metallschlauch 26, in einen Kanal 27 der als integraler Bestandteil des Fahrwerksrahmens 14 ausgebildet ist und hier als Trägerstruktur für den Bedienstand 18 dient (Fig. 3, Fig. 5). Für den Übergang zwischen dem Schlauch 26 und dem Kanal 27 ist ein Verbindungselement 28 vorgesehen, welches einen dichten Transport der Abgase bzw. der Dämpfe ermöglicht. Erfindungsgemäß kann es vorgesehen sein, dass der Kanal 27 derart dicht ausgebildet ist, dass die Abgase bzw. die Dämpfe den Kanal nicht verlassen können oder alternativ in den Kanal 27 ein weiterer Schlauch positioniert ist, zum Abführen der Abgase bzw. der Dämpfe.

Der Kanal 27 des Fahrwerksrahmens 14 geht direkt über in die Säule 20 bzw. in den ersten Säulenabschnitt 21 des Bedienstands (Fig. 2). Ein hier nicht dargestelltes Ausführungsbeispiel kann es vorsehen, dass sich diese Säule 20 bis zum Dach 19 des Bedienstands 18 erstreckt und oberhalb des Dachs 19 in einem Auslass 29 endet. Dabei werden die Abgase bzw. die giftigen Dämpfe permanent durch einen Kanal geleitet, der durch das Innenvolumen der Säule 20 gebildet wird.

Bei dem in Fig. 2 dargestellten Ausführungsbeispiel werden die Abgase zunächst aus dem Kanal 27 des Fahrwerksrahmens 14 in den ersten Säulenabschnitt 21 geleitet. Im Weiteren werden die Abgase über ein weiteres Verbindungselement 30 in einen flexiblen Schlauch 31 geleitet, der sich entlang des zweiten Säulenabschnitts 22 zum Auslass 29 im Bereich des Daches 19 erstreckt. Dieses Ausführungsbeispiel ist besonders vorteilhaft, da ohne Weiteres der Bedienstand 18 in bekannter Weise verschwenkbar ist. Zum Fixieren des Schlauchs 31 an dem zweiten Säulenabschnitt 22 lässt sich dieser beispielsweise mit einer Klammer 32 an dem Säulenabschnitt 22 befestigen.

Ein weiteres nicht dargestelltes Ausführungsbeispiel kann es vorsehen, dass die Abgase aus dem ersten Säulenabschnitt 21 durch einen kurzen Schlauch in den zweiten Säulenabschnitt 22 geleitet werden, der ebenfalls in seinem Inneren kanalartig ausgebildet ist. Von diesem zweiten Säulenabschnitt werden die Abgase wieder direkt in den Auslass 29 geführt oder über einen weiteren kurzen Schlauchabschnitt zum Auslass 29 geführt. Bei diesem Ausführungsbeispiel sind somit keine Schläuche mehr vorgesehen, welche die Abgase entlang der Säulen 20 transportieren.

Bei einem weiteren, nicht dargestellten Ausführungsbeispiel kann es vorgesehen sein, dass mehrere Säulen 20 des Bedienstandes 18 zumindest bereichsweise kanalartig ausgebildet sind oder Schläuche aufweisen, um die Abgase abzuführen.

### Bezugszeichenliste:

- 10: Straßenfertiger
- 11: Antriebseinheit
- 12: Fahrwerk
- 13: Fertigungsrichtung
- 14: Fahrwerksrahmen
- 15: Vorratsbehälter
- 16: Verteilerschnecke
- 17: Einbaubohle
- 18: Bedienstand
- 19: Dach
- 20: Säule
- 21: erster Säulenabschnitt
- 22: zweiter Säulenabschnitt
- 23: Abgasleitung
- 24: Gebläse
- 25: Ansaugöffnung
- 26: Schlauch
- 27: Kanal
- 28: Verbindungselement
- 29: Auslass
- 30: Verbindungselement
- 31: Schlauch
- 32: Klammer

## Patentansprüche

1. Straßenbaumaschine, insbesondere Straßenfertiger (10) oder Beschicker, mit einem einen Fahrwerksrahmen (14) aufweisenden antreibbaren Fahrwerk (12), mindestens einem Vorratsbehälter (15) zur Aufnahme von Straßenbaumaterial, einem Bedienstand (18) auf oder an dem Fahrwerk (12) bzw. dem Fahrwerksrahmen (14) und einem Förderer zum Fördern des Straßenbaumaterials aus dem Vorratsbehälter (15) zu einer in Fertigungsrichtung (13) gesehen hinter dem Fahrwerk (12) angeordneten Einbaubohle (17) bzw. zu einem Abförderer, **dadurch gekennzeichnet, dass** in dem Fahrwerksrahmen (14) Kanäle angeordnet sind, die zum Abführen von Abgasen oder Dämpfen des Straßenbaumaterials aus dem Bereich des Förderers und/oder einer in Fertigungsrichtung (13) gesehen vor der Einbaubohle (17) angeordneten Verteilerschnecke (16) zu einem Auslass (29) ausgebildet sind.

2. Straßenbaumaschine nach Anspruch 1, **dadurch gekennzeichnet, dass** die Kanäle des Fahrwerksrahmens (14) integrale Bestandteile des Fahrwerksrahmens (14) sind.

3. Straßenbaumaschine, insbesondere Straßenfertiger (10) oder Beschicker, mit einem einen Fahrwerksrahmen (14) aufweisenden antreibbaren Fahrwerk (12), mindestens einem Vorratsbehälter (15) zur Aufnahme von Straßenbaumaterial, einem Bedienstand (18) auf oder an dem Fahrwerk (12) bzw. dem Fahrwerksrahmen (14) und einem Förderer zum Fördern des Straßenbaumaterials aus dem Vorratsbehälter (15) zu einer in Fertigungsrichtung (13) gesehen hinter dem Fahrwerk (12) angeordneten Einbaubohle (17) bzw. zu einem Abförderer, insbesondere nach Anspruch 1 oder 2, **dadurch gekennzeichnet, dass** mindestens eine Säule (20) des Bedienstandes (18) wenigstens abschnittsweise als Kanal ausgebildet ist zum Abführen von Abgasen oder Dämpfen des Straßenbaumaterials aus dem Bereich des Förderers und/oder einer in Fertigungsrichtung (13) gesehen vor der Einbaubohle (17) angeordneten Verteilerschnecke (16) zu einem Auslass (29), wobei der Auslass (29) vorzugsweise über dem Bedienstand (18) positioniert ist.

4. Straßenbaumaschine nach einem der vorherigen Ansprüche, **dadurch gekennzeichnet, dass** mindestens in einem Kanal oder in einer Säule (20) wenigstens abschnittsweise ein, vorzugsweise flexibler, Schlauch (31) angeordnet ist, um Dämpfe des Straßenbaumaterials oder Abgase aus dem Bereich des Förderers und/oder der Verteilerschnecke (16) zum Auslass (29) zu leiten.

5. Straßenbaumaschine nach einem der vorherigen Ansprüche, **dadurch gekennzeichnet, dass** mindestens ein Kanal einer Säule (20) zusammen mit mindestens einem innerhalb oder außerhalb der Säule (20) angeordneten Schlauch (31) eine Leitung für die Dämpfe, insbesondere eine Abgasleitung (23) bilden, die vom Förderer und/oder der Verteilerschnecke (16) bis zum Auslass (29) über dem Bedienstand (18) führt und/oder der mindestens eine Kanal in einem ersten Säulenabschnitt (21) einer Säule (20) angeordnet ist und der mindestens eine, vorzugsweise flexible, Schlauch (31) außen an einem zweiten Säulenabschnitt (22) der Säule (20) angeordnet ist.

6. Straßenbaumaschine nach einem der vorherigen Ansprüche, **dadurch gekennzeichnet, dass** ein Ende des in dem ersten Säulenabschnitt (21) angeordneten Kanals durch ein Verbindungselement (30), das vorzugsweise außen an dem ersten Säulenabschnitt (21) angeordnet ist, mit einem Ende des außen an dem zweiten Säulenabschnitt (22) angeordneten Schlauchs (31) verbunden ist.

7. Straßenbaumaschine nach einem der vorherigen Ansprüche, **dadurch gekennzeichnet, dass** der Fahrwerksrahmen (14) unterhalb des Bedienstandes (18) eine Ansaugöffnung (25), die insbesondere durch ein Filterelement abgedeckt ist, aufweist, wobei durch die Ansaugöffnung (25) Dämpfe oder Abgase von dem Förderer, insbesondere von dem heißen Straßenbaumaterial, in das Innere des Fahrwerksrahmens (14) ansaugbar sind.

8. Straßenbaumaschine nach einem der vorherigen Ansprüche, **dadurch gekennzeichnet, dass** der Verteilerschnecke (16) mindestens ein Absaugorgan, insbesondere zwei flexible Schläuche, zugeordnet sind, die vorzugsweise an gegenüberliegenden Enden der Verteilerschnecke (16) angeordnet sind, zum Absaugen der Dämpfe des Straßenbaumaterialsund/oder
dass das mindestens eine Absaugorgan mit einem die Verteilerschnecke (16) haltenden Rahmen verbunden ist, wobei der Rahmen vorzugsweise integrale Kanäle aufweist, die mit dem mindestens einem Absaugorgan verbunden sind zum Abführen der Dämpfe des Straßenbaumaterials zum Auslass (29).

9. Straßenbaumaschine nach einem der vorherigen Ansprüche, **dadurch gekennzeichnet, dass** über der Verteilerschnecke (16) vor dem mindestens einem Absaugorgan ein Filterelement, insbesondere ein Sieb oder eine Perforation, im die Verteilerschnecke (16) haltenden Rahmen, angeordnet ist, welches Partikel aus den Dämpfen abscheidet.

10. Straßenbaumaschine nach einem der vorherigen Ansprüche, **dadurch gekennzeichnet, dass** dem Fahrwerksrahmen (14) ein Gebläse (24) zugeordnet ist, das die Dämpfe oder Abgase vom Förderer und/oder der Verteilerschnecke (16) durch die Ansaugöffnung (25) und/oder das Filterelement ansaugt und durch mindestens einen Kanal (27) und/oder mindestens einen Schlauch (26, 31) dem Auslass (29) zuführt und/oder die Ansaugöffnung (25), das Gebläse (24) und ein Kanal durch mindestens einen weiteren dem Fahrwerksrahmen (14) integralen Kanal (27) und/oder einen, insbesondere flexiblen, Schlauch (27, 31) miteinander verbunden sind.

11. Straßenbaumaschine nach einem der vorherigen Ansprüche, **dadurch gekennzeichnet, dass** das Filterelement an der Verteilerschnecke (16), das Gebläse (24) und ein Kanal durch mindestens einen weiteren dem Fahrwerksrahmen (14) integralen Kanal (27) und/oder einen, insbesondere flexiblen, Schlauch (27, 31) miteinander verbunden sind.

12. Straßenbaumaschine nach einem der vorherigen Ansprüche, **dadurch gekennzeichnet, dass** zwei Säulen (20) des Bedienstandes (18) als Kanäle zum Abführen von Abgasen ausgebildet sind, wobei insbesondere jeweils ein Ende der Kanäle mit jeweils einem Schlauch (31) verbunden sind, die über weitere Kanäle (27) und/oder Schläuche (26, 31) mit dem Gebläse (24) verbunden sind.

13. Straßenbaumaschine nach einem der vorherigen Ansprüche, **dadurch gekennzeichnet, dass** von dem Gebläse (24) mindestens ein Schlauch, vorzugsweise zwei Schläuche, zu einem Rohr führen, welches quer zur Fertigungsrichtung (13) ausgerichtet ist, und dessen Enden jeweils mit einer Säule (20) des Bedienstandes in Verbindung stehen.

14. Straßenbaumaschine nach einem der vorherigen Ansprüche, **dadurch gekennzeichnet, dass** jeweils ein flexibler Schlauch (31) einen Kanal (27) des Fahrwerksrahmens (14) mit einem Kanal einer Säule (20) und/oder einen ersten Säulenabschnitt (21) mit einem zweiten Säulenabschnitt (22) und/oder eine Säule (20) bzw. einen zweiten Säulenabschnitt (22) mit dem Auslass (29) verbindet.

15. Straßenbaumaschine nach einem der vorherigen Ansprüche, **dadurch gekennzeichnet, dass** die Abgase der Antriebseinheit (11) von dem Gebläse (24) durch mindestens einen Schlauch und durch mindestens einen Kanal dem Auslass (29) zuführbar sind.
